# EUROPÄISCHE PATENTSCHRIFT

(11) **EP 0 860 363 B1**
(45) Veröffentlichungstag und Bekanntmachung des Hinweises auf die Patenterteilung: **11.10.2000**
(21) Anmeldenummer: 98103014.1
(22) Anmeldetag: 20.02.1998
(51) Int. Cl.: B65B 55/02

(54) **Aseptisch arbeitende FFS-Maschine**
Aseptic machine for making, filling and sealing packages
Machine aseptique pour la fabrication, le remplissage et le scellement d'emballages

(30) Priorität: 20.02.1997 DE 29702973 U
(43) Veröffentlichungstag der Anmeldung: 26.08.1998
(73) Patentinhaber: Hassia Verpackungsmaschinen GmbH, D-63689 Ranstadt (DE)
(72) Erfinder: Kurth, Gunter, 63691 Ranstadt (DE)
(74) Vertreter: Wolf, Günter, Dipl.-Ing.

(56) Entgegenhaltungen:
- EP-A- 0 727 357

## Beschreibung

Die Erfindung betrifft eine aseptisch arbeitende FFS-Maschine zum Formen, Füllen und Schließen von an einer getaktet geförderten Packstoffbahn auszubildenden Behältnissen gemäß Oberbegriff des Anspruches 1.

Derartige FFS-Maschinen sind bspw. nach der DE-A-195 05 197 bekannt. Die über die Förderstrecke im Takt durchgezogene Packstoffbahn gleitet dabei mit ihren Rändern unter Spaltbildung längs der Halbtunnelränder, so daß das unter leichtem Überdruck im Halbtunnel stehende Sterilmittel ständig beidseitig durch die Spalte ausströmt und dabei etwa keimbelasteter Luftzutritt von außen verhindert wird.

Zur Packstoffbahnförderung ist es außerdem allgemein bekannt, die Ränder von Packstoffbahnen mittels Klammer- oder Stachelketten zu fassen, um damit die Packstoffbahnen präziser fördern zu können. Soweit derartige Fördermittel an aseptisch arbeitenden FFS-Maschinen überhaupt verwendet wurden, mußten diese Fördermittel im Sterilraum mit untergebracht werden, und außerdem ist dies mit der ständigen Gefahr, bedingt durch den Ein- und Austritt der endlos umlaufenden Ketten, einer bakteriologischen Rekontamination verbunden, was der Grund ist, daß man Maschinen der eingangs genannten Art in der Regel ohne solche getaktet zwangsumlaufende Fördermittel betreibt, obgleich es mit Rücksicht auf eine präzise Förderung der Packstoffbahn an sich in hohem Maße wünschenswert ist für eine solche präzise Förderung zu sorgen.

Ausgehend von einer FFS-Maschine der eingangs genannten Art, liegt der Erfindung die Aufgabe zugrunde, derartige Maschinen auf einfache Weise dahingehend zu verbessern, daß die beiden Bedingungen aseptische Betriebsweise einerseits und präzise Förderung der Packstoffbahn andererseits erfüllt sind.

Diese Aufgabe ist mit einer FFS-Maschine der eingangs genannten Art nach der Erfindung durch die im Kennzeichen des Anspruches 1 genannten Merkmale gelöst.

Das Prinzip der vorerläuterten Spaltabströmung des Sterilmittels aus dem Halbtunnel ist hierbei also beibehalten, wobei aber gleichzeitig eine präzise Förderung der Packstoffbahn durch außerhalb des Sterilraumes geführte Fördermittel erreicht wird und dabei dafür gesorgt ist, daß diese Fördermittel, soweit sie mit der Packstoffbahn im Eingriff stehen, bzw. unmittelbar benachbart zu deren Rändern laufen, ebenfalls dem abströmenden Sterilmittel ausgesetzt sind.

Die erfindungsgemäße FFS-Maschine und deren vorteilhafte Ausführungsformen werden nachfolgend anhand der zeichnerischen Darstellung von Ausführungsbeispielen näher erläutert.

Es zeigt schematisch
- Fig. 1: perspektivisch einen Teil einer randgeführten Packstoffbahn;
- Fig. 2: eine Ansicht der Randführung der Packstoffbahn in Richtung der Pfeile P in Fig. 1;
- Fig. 3: einen Schnitt durch einen der Führungskanäle mit einem in einer Horizontalebene umlaufenden Förderelement;
- Fig. 4: einen Schnitt im Sinne der Fig. 3 aber mit einem in einer Vertikalebene umlaufenden Förderelement;
- Fig. 5: eine Teildraufsicht auf die Packstoffbahnförderstrecke und
- Fig.6 A, B: einen Teilabschnitt eines Fördermittelstranges gemäß Fig. 3 und 5 in Seitenansicht (A) und in Draufsicht (B) .

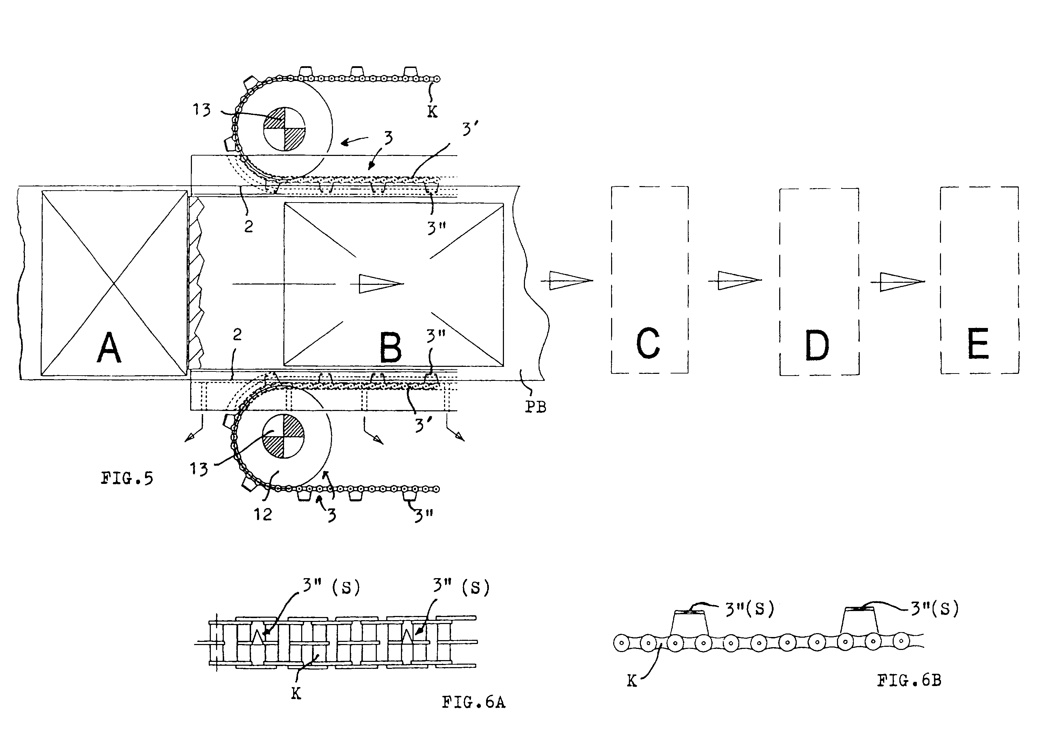

Unter Verweis auf insbesondere Fig. 5 besteht die nur im Prinzip dargestellte FFS-Maschine aus Sterilisations- A, Vorwärm- B, Tiefzieh- C, Füll- D und Schließstation E und aus Einrichtungen zur Sterilführung der Packstoffbahn PB bis zur Schließstation E, wobei die Einrichtungen zur Sterilführung aus einem Steriltunnel 1 gebildet sind, der als Halbtunnel ausgebildet ist und der sich, mit einem Sterilmittelanschluß versehen und unter Sterilmitteldruck stehend, von der Sterilisationsstation A über alle Stationen B bis E erstreckt und mit seinen unteren Tunnelrändern 2 die Packstoffbahnränder umfaßt. Da dies alles bekannt ist, bedürfen die einzelnen Stationen keiner näheren Erläuterung.

Für eine derartige, aseptisch betriebene FFS-Maschine ist nun wesentlich, daß die Tunnelränder in Form von Führungskanälen ausgebildet sind, daß die Führungskanäle jeweils einen Strang von Förderelementen, wie Stachelkette o. dgl., umfassen, daß jeder Strang mit dem Packstoffbahnrand im Fördereingriff steht, daß die Führungskanäle packstoffbahnseitig zum Innenraum des Steriltunnels hin offen sind und auf der gegenüberliegenden Seite Sterilmittelaustrittsöffnungen aufweisen.

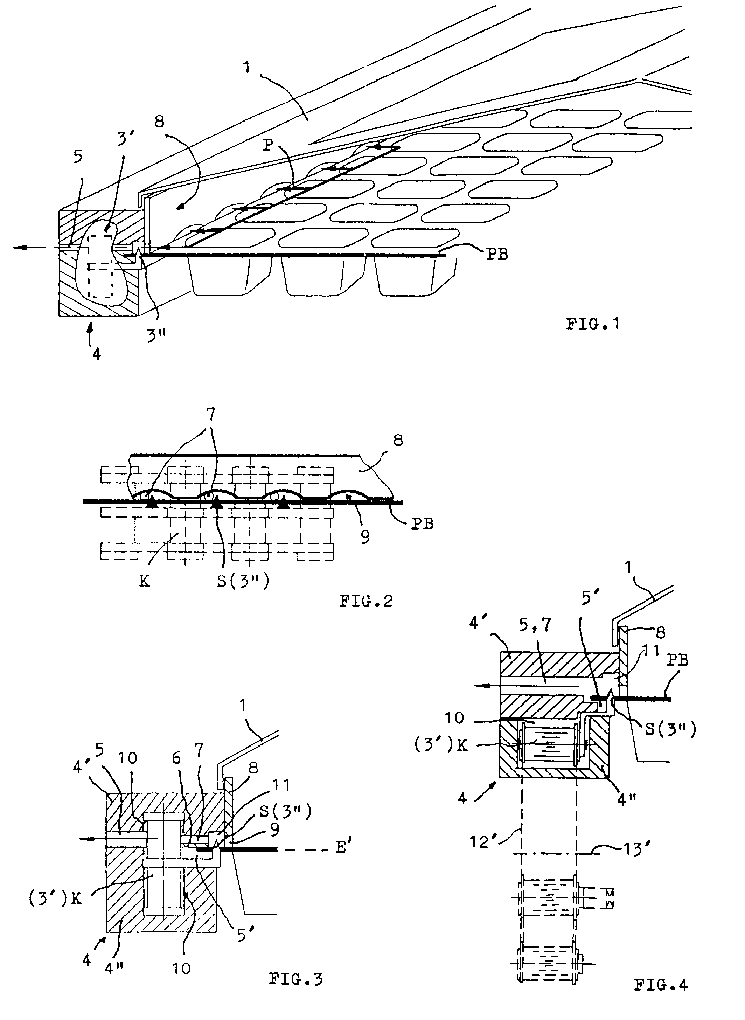

Durch diese Ausbildung ändert sich an der seitlichen Permanentabströmung des Sterilmittels über die von der Stachelkette erfaßten Packstoffbahnränder nichts, wobei aber, wie insbesondere aus Fig. 3 ersichtlich, die in die Ränder der Packstoffbahn PB von unten her eingestochenen Stacheln S der Kette K und auch diese selbst sich im ab- bzw. ausströmenden Sterilmittel befinden, d.h., keimbelastete Außenluft kann nicht an die Packstoffbahn PB gelangen.

Vorteilhaft und zweckmäßig weisen die Führungskanäle 4 packstoffbahnseitig einen Laufspalt 5' für die Packstoffbahnerfassungselemente 3'' auf, dessen obere Begrenzungsfläche 6 in der Packstoffbahnförderebene E' angeordnet ist, wobei oberhalb der Packstoffbahnförderebene E' Sterilmitteldurchströmöffnungen 7 angeordnet sind.

Ferner ist in Weiterbildung packstoffbahnseitig am oberen Teil des jeweiligen Führungskanales 4 eine Packstoffbahn-Führungsleiste 8 mit Sterilmitteldurchströmausnehmungen 9 angeordnet und schließlich können die Führungskanäle 4 aus einem Oberteil 4' und einem Unterteil 4'' gebildet sein, wobei das eine und / oder andere Teil eine Laufrinne 10 für den im Fördereingriff stehenden Strang 3' enthält.

Die sowieso für den Freilauf der durch die Packstoffbahn PB gestochenen Stachel S in den Führungskanälen 4 erforderlichen Auskehlungen 11 sorgen im übrigen für weitgehend gleichmäßig verteilte Abströmverhältnisse, d.h., die Sterilmitteldurchströmöffnungen 7 setzen erst an diesen Auskehlungen 11 an.

Was Anordnung und Ausbildung der Förderelemente 3 selbst betrifft, so handelt es sich in jedem Fall um Endlosketten, die über entsprechende Kettenräder 12 geführt sind und im Takt angetrieben werden.

Abgesehen von Fig. 4 handelt es sich bei den in den anderen Ausführungsbeispielen um in Horizontalebenen geführte Ketten, die, wie insbesondere Fig. 6A verdeutlicht, das abströmende Sterilmittel (senkrecht zur Darstellungsebene) in keiner Weise behindern. Bei dieser Anordnung muß natürlich ein- und ablaufseitig in geeigneter Weise dafür gesorgt werden, daß die Stacheln S die Packstoffbahnränder durchstoßen und daß ablaufseitig eine Entrastung erfolgt.

Im Gegensatz zu den vertikal orientierten Achsen 13 der Kettenränder 12 gemäß Fig. 5 sind die Achsen 13' der Kettenränder 12' bei der Ausführungsform nach Fig. 4 horizontal angeordnet. Die Kette K ist dann bspw. wie dargestellt gestaltet bei konstruktiv entsprechend ausgebildeten Führungskanälen 4. Diese Ausführungsform hätte den Vorteil geringerer seitlicher Rauminanspruchnahme und insoweit auch problemloserer Ver- und Entrastung der Stachel S mit der Packstoffbahn.

## Patentansprüche

1. Aseptisch arbeitende FFS-Maschine zum Formen, Füllen und Schließen von an einer getaktet geförderten Packstoffbahn (PB) auszubildenden Behältnissen, bestehend aus Sterilisations- (A), Vorwärm- (B), Tiefzieh- (C), Füll- (D) und Schließstation (E) und aus Einrichtungen zur Sterilführung der Packstoffbahn (PB) bis zur Schließstation (E), wobei die Einrichtungen zur Sterilführung aus einem Steriltunnel (1) gebildet sind, der als Halbtunnel ausgebildet ist und der sich, mit einem Sterilmittelanschluß versehen und unter Sterilmitteldruck stehend, von der Sterilisationsstation (A) über alle Stationen (B bis E) erstreckt und mit seinen unteren Tunnelrändern (2) die Packstoffbahnränder umfaßt, und
die Tunnelränder sind (2) in Form von Führungskanälen (4) ausgebildet dadurch gekennzeichnet, ,
daß die Führungskanäle (4) jeweils einen Strang (3') von Förderelementen (3), wie Stachelkette o. dgl., umfassen,
daß jeder Strang (3') mit dem Packstoffbahnrand im Fördereingriff steht,
daß die Führungskanäle (4) packstoffbahnseitig zum Innenraum des Steriltunnels (1) hin offen sind und auf der gegenüberliegenden Seite Sterilmittelaustrittsöffnungen (5) aufweisen.

2. FFS-Maschine nach Anspruch 1,
**dadurch gekennzeichnet,**
daß die Führungskanäle (4) packstoffbahnseitig einen Laufspalt (5') für die Packstoffbahnerfassungselemente (3'') aufweisen, dessen obere Begrenzungsfläche (6) in der Packstoffbahnförderebene (E') angeordnet ist, wobei oberhalb der Packstoffbahnförderebene (E') Sterilmitteldurchströmöffnungen (7) angeordnet sind.

3. FFS-Maschine nach Anspruch 1 oder 2,
**dadurch gekennzeichnet,**
daß packstoffbahnseitig am oberen Teil des jeweiligen Führungskanales (4) eine Packstoffbahn-Führungsleiste (8) mit Sterilmitteldurchströmausnehmungen (9) angeordnet ist.

4. FFS-Maschine nach einem der Ansprüche 1 bis 3,
**dadurch gekennzeichnet,**
daß die Führungskanäle (4) aus einem Oberteil (4') und einem Unterteil (4'') gebildet sind, wobei das eine und / oder andere Teil eine Laufrinne (10) für den im Fördereingriff stehenden Strang (3') enthält.

## Claims

1. An aseptically operating FFS machine for forming, filling and sealing of containers to be formed on a cyclically supplied web of packing foil (BP), comprising a sterilization station A, a preheating station B, a deep-drawing station C, a loading station D and a sealing station E and means for the sterile guidance of the web of packing foil (PB) to the sealing station (E), with the means for the sterile guidance being formed of a sterile tube (1) configured as a semi-tube and provided with a connection for the sterile agent and exposed to the pressure of the sterile agent, extending from the sterilization station (A) via all stations (B through E) and, with the bottom tube edges (2), embracing the edges of the web of packing foil and with the tube edges (2) being configured in the form of guiding channels (4), characterized in that the guiding channels (4) each embrace a line (3') of conveying elements (3) such as a spike chain or the like, that each line (3') is in conveying engagement with the edge of the web of packing foil, that the guiding channels (4) on the side of the web of packing foil toward the interior of the sterile tube (1) are open and on the opposite side are provided with openings (5) for the discharge of sterile agent.

2. An FFS machine according to claim 1, characterized in that the guiding channels (4) on the side of the web of packing foil are provided with a passage gap (5') for the elements (3") seizing the web of packing foil, the upper limiting face (6) of which is arranged in the plane (E') conveying the web of packing foil, with openings (7) for the flow of sterile agent being arranged above the plane (E') conveying the web of packing foil.

3. An FFS machine according to claims 1 or 2, characterized in that arranged on the side of the web of packing foil, on the upper part of the respective guiding channel (4), is a strip (8) for guiding the web of packing foil having recesses (9) for the flow of sterile agent.

4. An FFS machine according to any one of claims 1 through 3, characterized in that the guiding channels (4) are formed of an upper part (4') and a lower part (4"), with one and/or the other of said parts including a racing groove (10) for the line (3') in conveying engagement.

## Revendications

1. Machine FFS travaillant aseptiquement pour former, remplir et fermer des récipients devant être formés sur une bande de matériau d'emballage (PB) transportée de manière cadencée constituée par une station de stérilisation (A), une station de préchauffage (B), une station d'emboutissage (C), une station de remplissage (D) et une station de fermeture (E) et des dispositifs pour le guidage stérile de la bande de matériau d'emballage (PB) jusqu'à la station de fermeture (E), les dispositifs pour le guidage stérile étant formés par un tunnel stérile (1) qui est configuré comme un demi-tunnel et qui, étant équipé d'un raccord de substance aseptique et étant sous pression de substance aseptique, s'étend de la station de stérilisation (A) sur toutes les stations (B À E) et enserre avec ses bords inférieurs de tunnel (2) les bords de la bande de matériau d'emballage et les bords du tunnel (2) étant configurés en forme de conduits de guidage (4),
caractérisée en ce
que les conduits de guidage (4) enserrent respectivement un tronçon (3') d'éléments de transport (3) comme une chaîne à picots ou équivalent,
que chaque tronçon (3') est en prise de transport avec le bord de la bande de matériau d'emballage,
que les conduits de guidage (4) sont ouverts vers l'espace intérieur du tunnel stérile (1) du côté de la bande de matériau d'emballage et qu'ils présentent des orifices de sortie de substance aseptique (5) sur le côté opposé.

2. Machine FFS selon la revendication 1,
caractérisée en ce
que les conduits de guidage (4) présentent, du côté de la bande de matériau d'emballage, une fente de marche (5') pour les éléments de saisie de la bande de matériau d'emballage (3") dont la face de délimitation supérieure (6) est placée dans le plan de transport de la bande de matériau d'emballage (E'), des ouvertures de passage de substance aseptique (7) étant placées au-dessus du plan de transport de la bande de matériau de transport (E').

3. Machine FFS selon la revendication 1 ou 2,
caractérisée en ce
qu'une barre de guidage de la bande de matériau d'emballage (8) avec des évidements de passage de la substance aseptique (9) est placée du côté de la bande de matériau d'emballage sur la partie supérieure du conduit de guidage respectif (4).

4. Machine FFS selon l'une des revendications 1 à 3,
caractérisée en ce
que les conduits de guidage (4) sont formés par une partie supérieure (4') et une partie inférieure (4"), l'une et/ou l'autre partie contenant une goulotte de roulement (10) pour le tronçon (3') qui est en prise de transport.
